# EUROPEAN PATENT APPLICATION

(11) **EP 3 789 177 A1**
(43) Date of publication of application: **10.03.2021**
(21) Application number: 20193899.0
(22) Date of filing: 01.09.2020
(51) Int. Cl.: B29C 45/26, B29C 33/44

(54) **THREADED MOLD DECOUPLING ASSEMBLY**

(30) Priority: 03.09.2019 US 201916558816
(71) Applicant: NyproMold Inc., Clinton MA 01510 (US)
(72) Inventor: Nguyen, Tuan H., Clinton, MA, 01510 (US)
(74) Representative: Gulde & Partner

(57) **Abstract**

A threaded mold decoupling system comprises a set of unscrewing assemblies, each unscrewing assembly disposed in proximity to a corresponding threaded core of a set of threaded cores and having an unscrewing element defining an unscrewing element circumference and a driving element disposed in operative communication with an unscrewing assembly of the at least one set of unscrewing assemblies. The driving element defines a driving element circumference, a ratio of the driving element circumference to the unscrewing element circumference defining a number of rotations of each unscrewing element relative to a number of rotations of the driving element. The driving element is configured to rotate each unscrewing element in a first direction between a first position and a second position to decouple each threaded core from a corresponding molded article and in a second direction between the second position and the first position to reset each unscrewing assembly.

## Description

### BACKGROUND

### Field

Embodiments of the innovation relate, generally, to an apparatus used with an injection mold and configured to cycle the rotational position of an unscrewing assembly following molding of the part by the injection mold.

### Description of the Background

Manufacturers utilize injection molds to produce a variety of molded articles. For example, certain injection molds are used to produce threaded molded articles, such as threaded plastic covers for bottles or other containers. These injection molds utilize threaded cores to form the threads in the molded articles.

At the end of a molding cycle, a removal mechanism can be utilized to remove the threaded molded articles from the corresponding threaded cores. For example, the removal mechanism, such as a hydraulically operated rack and stripper plate, can unscrew the threaded molded article from the corresponding threaded core to minimize damage to the threads. During operation, actuation of the hydraulically operated rack can rotate the threaded cores of the injection mold relative to the molded articles, such as in a counterclockwise direction, in order to decouple the threads of the cores from the corresponding threads of the molded articles. The mechanically actuated, mechanically timed stripper plate then ejects each threaded molded article from the corresponding threaded core. Following ejection of the threaded mold article from the threaded core, further actuation of the hydraulically operated rack in an opposite direction can rotate the threaded cores of the injection mold, such as in a clockwise direction, in order to position the threaded cores for a subsequent molding procedure.

### SUMMARY

Conventional molded article removal mechanisms can suffer from a variety of deficiencies. For example, as provided above, with conventional injection molds, threaded cores are typically actuated by a hydraulically operated rack. However, standard clearances and manufacturing tolerances permit small variations in gear tooth size and pitch between the conventional rack and the gearing mechanism associated with the threaded cores. Such variations cause the interacting surfaces of the meshing mechanisms to exhibit small gaps or spaces between their respective meshing teeth. These spaces can allow a limited amount of slack or backlash to enter into the system during operation of the rack and threaded core mechanisms. With the presence of the backlash, the gears of the rack and core mechanisms are prone to wear and can require constant lubrication. Accordingly, conventional unscrewing mechanisms can be relatively expensive to maintain.

Also, the use of conventional hydraulic systems, such as the hydraulically operated rack, can contaminate the molded articles. For example, operation of a hydraulically operated rack can generate wear particles which can be introduced into the mold cavities of the injection molds. As such, it is not ideal for manufacturers to use hydraulic systems in the food or medical molded article industries. The use of hydraulic systems can also introduce additional costs to the injection molds. For example, newer injection molding machines (IMM) operate under electric power. Therefore, a manufacturer would be required to spend additional capital requires to purchase additional equipment to have the IMM's run hydraulically.

Further, conventional hydraulic systems generally utilize a relatively long stroke length due to the thread length in the molded articles. Due to the nature of this long stroke length, the hydraulic cylinders of the conventional injection molds are mounted to the top of the mold. This provides the rack with adequate room to extend from the bottom of the mold during unscrewing movement. However, this geometric configuration can limit the number of mold cavities that can be included in the mold.

Additionally, the configuration of conventional rack and threaded core mechanisms limits the speed at which the molded articles can be unscrewed from the threaded cores. For example, rack and pinion systems on conventional stack molds typically can open and close once every five seconds. Such operation can limit the quantity of threaded molded articles that a conventional injection mold can produce per cycle.

Further, conventional injection molds can be configured to produce threaded molded caps, each having a base portion, a lid portion, and a hinge connecting the base and lid portions. These injection molds can include cap closing devices which are configured to rotate the lid portions closed onto the corresponding base portions of the molded caps following molding of the caps. Such a closing process can maintain the sterility of the interior of the molded caps and can mitigate a need for additional manual processing to close the molded caps. However, injection molds which utilize conventional rack and threaded core mechanisms may not accurately reposition the threads of the threaded cores relative to the cap closing devices after each molded cap decoupling procedure. With the rack and threaded core mechanisms being unable to reposition of the threaded cores in a consistent and repeatable manner following subsequent ejection processes, the orientation of the lids of subsequently molded caps can be offset or angled relative to the cap closing devices. As such, the cap closing devices may be unable to properly close the lids of the subsequently molded caps during a closing process.

By contrast to conventional removal mechanisms, embodiments of the present innovation relate to an injection molding system configured to control the positioning of each threaded core during operation. In one arrangement, the injection molding system can be used to manufacture threaded molded caps that are configured to be folded closed prior to ejection from the mold. The injection mold system includes a threaded mold decoupling system having one or more sets of unscrewing assemblies disposed in operative communication with a driving element and in operative communication with corresponding threaded cores. The relative circumferences of the driving element and the corresponding unscrewing assemblies provides substantially consistent and repeatable repositioning of the threads of the threaded mold cores over the course of multiple cycles. Such repositioning of the threaded cores ensures the proper orientation of the correspondingly molded threaded caps relative to the in-mold cap closing devices.

In one embodiment, based upon the relative circumferences of the driving gear and the unscrewing elements, a single revolution of the drive gear can cause each of the unscrewing elements to rotate either two, three, or four turns. This configuration allows the threaded mold decoupling system to accurately position the threaded cores relative to the in-mold cap closing devices regardless of the thread sizes associated with the mold cores.

The layout of the threaded mold decoupling system can be configured to maximize the number of threaded mold cavities that can be included in an unscrewing mold assembly. For example, the threaded mold decoupling system is arranged such that a single drive gear can control the rotational positioning of sixteen (16) unscrewing elements. Further, the threaded mold decoupling system utilizes standard sized and pitched gears for both the drive gear and the unscrewing elements. Because the components are conventional off-the-shelf elements, the configuration of the threaded mold decoupling system mitigates the requirement for relatively costly, custom-manufactured components.

Embodiments of the innovation can relate to a threaded mold decoupling system comprising at least one set of unscrewing assemblies, each unscrewing assembly of the at least one set of unscrewing assemblies disposed in proximity to a corresponding threaded core of a set of threaded cores and each unscrewing assembly having an unscrewing element defining an unscrewing element circumference and a driving element disposed in operative communication with an unscrewing assembly of the at least one set of unscrewing assemblies, the driving element defining a driving element circumference, a ratio of the driving element circumference to the unscrewing element circumference defining a number of rotations of each unscrewing element relative to a number of rotations of the driving element. The driving element can be configured to rotate each unscrewing element in a first direction, based upon the ratio, between a first position and a second position to decouple each threaded core from a corresponding molded article and rotate each unscrewing element in a second direction, based upon the ratio, between the second position and the first position to reset each unscrewing assembly for a subsequent molding procedure.

The at least one set of unscrewing assemblies may comprise four unscrewing assemblies and a hub element disposed in operative communication with each unscrewing element of the four unscrewing assemblies.

The four unscrewing assemblies may be disposed in a matrix of two rows by two columns relative to the hub element.

The at least one set of unscrewing assemblies may comprise four sets of unscrewing assemblies, the driving element disposed in operative communication with an unscrewing element of each of the four sets of unscrewing assemblies.

The four sets of unscrewing assemblies may be disposed in a matrix of four rows by four columns relative to the driving element.

The ratio of the driving element circumference to the unscrewing element circumference may be 3:1, such that one rotation of the driving element provides three rotations of each unscrewing element.

The ratio of the driving element circumference to the unscrewing element circumference may be 2.5:1, such that one rotation of the driving element provides two and one-half rotations of each unscrewing element.

The ratio of the driving element circumference to the unscrewing element circumference may be 2:1, such that one rotation of the driving element provides two rotations of each unscrewing element.

The ratio of the driving element circumference to the unscrewing element circumference may be 4:1, such that one rotation of the driving element provides four rotations of each unscrewing element.

Embodiments of the innovation can relate to an injection molding system comprising a first mold plate having a set of threaded cores; a second mold plate having a set of cavities corresponding to the set of threaded cores; and a threaded mold decoupling system coupled to the first mold plate, comprising: at least one set of unscrewing assemblies, each unscrewing assembly of the at least one set of unscrewing assemblies disposed in proximity to a corresponding threaded core of a set of threaded cores and each unscrewing assembly having an unscrewing element defining an unscrewing element circumference; and a driving element disposed in operative communication with an unscrewing assembly of the at least one set of unscrewing assemblies, the driving element defining a driving element circumference, a ratio of the driving element circumference to the unscrewing element circumference defining a number of rotations of each unscrewing element relative to a number of rotations of the driving element. The driving element can be configured to rotate each unscrewing element in a first direction, based upon the ratio, between a first position and a second position to decouple each threaded core from a corresponding molded article and rotate each unscrewing element in a second direction, based upon the ratio, between the second position and the first position to reset each unscrewing assembly for a subsequent molding procedure.

### BRIEF DESCRIPTION OF THE DRAWINGS

The foregoing and other objects, features and advantages will be apparent from the following description of particular embodiments of the innovation, as illustrated in the accompanying drawings in which like reference characters refer to the same parts throughout the different views. The drawings are not necessarily to scale, emphasis instead being placed upon illustrating the principles of various embodiments of the innovation.
FIG. 1 illustrates a schematic representation of an injection molding system, according to one embodiment.
FIG. 2 illustrates a schematic representation of a threaded mold decoupling system having a set of unscrewing assemblies and a driving assembly disposed in operational communication with the set of unscrewing assemblies, according to one embodiment.
FIG. 3 illustrates an unscrewing assembly disposed in operative communication with a threaded core, according to one embodiment.
FIG. 4 illustrates a top view of the threaded mold decoupling system of FIG. 1 where one rotation of a driving element provides three rotations of each unscrewing element, according to one embodiment.
FIG. 5 illustrates a top view of a configuration of the threaded mold decoupling system of FIG. 4 where one rotation of a driving element provides three rotations of each unscrewing element, according to one embodiment.
FIG. 6 illustrates a top view of a configuration of the threaded mold decoupling system of FIG. 4 where one rotation of a driving element provides three rotations of each unscrewing element, according to one embodiment.
FIG. 7 illustrates a top view of the threaded mold decoupling system of FIG. 1 where one rotation of a driving element provides two and one-half rotations of each unscrewing element, according to one embodiment.
FIG. 8 illustrates a top view of the threaded mold decoupling system of FIG. 1 where one rotation of a driving element provides two rotations of each unscrewing element, according to one embodiment.
FIG. 9 illustrates a top view of the threaded mold decoupling system of FIG. 1 where one rotation of a driving element provides four rotations of each unscrewing element, according to one embodiment.

### DETAILED DESCRIPTION

Embodiments of the present innovation relate to an injection molding system configured to control the positioning of each threaded mold element during operation. In one arrangement, the injection molding system can be used to manufacture threaded molded caps that are configured to be folded closed prior to ejection from the mold. The injection molding system includes a threaded mold decoupling system having one or more sets of unscrewing assemblies disposed in operative communication with a driving element and in operative communication with corresponding threaded cores. The relative circumferences of the driving element and the corresponding unscrewing assemblies provides substantially consistent and repeatable repositioning of the threads of the threaded mold cores over the course of multiple cycles. Such repositioning of the threaded cores ensures the proper orientation of the correspondingly molded threaded caps relative to the in-mold cap closing devices.

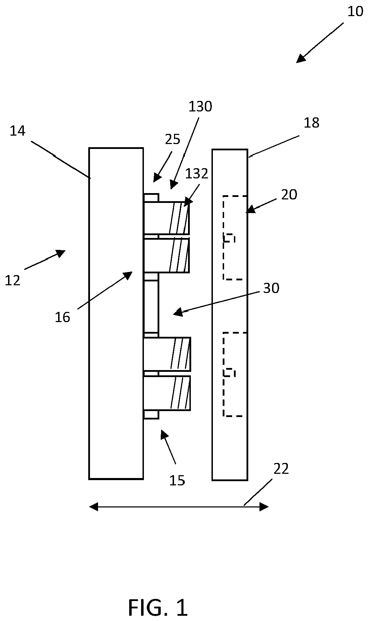

FIG. 1 illustrates a schematic representation of an injection molding system 10, according to an embodiment of the present innovation. The injection molding system 10 may include a mold assembly 12 having a first mold plate 14 which includes a first set of cap mold elements 16, such as threaded cores 130 having threads 132, and a second mold plate 18 which includes a corresponding second set of cap mold elements 20, such as cavities. Taken together, the first and second set of cap mold elements 16, 20 define a volume of a cap, such as having a lid, a base, and a hinge which attaches the lid to the base.

The injection molding system 10 may be configured to adjust the relative lateral positioning of the first and second mold plates 14, 18 and the corresponding first and second cap mold elements 16, 20. For example, during operation, the injection molding system 10 may position the first and second mold plates 14, 18 along axis 22 to a closed position to dispose the cap mold elements 16 at least partially within the cavities 20. The injection molding system 10 can then receive an injection of a material, such as a liquid plastic material, into the volume between the first and second sets of mold elements 16, 20 to create a set of molded articles, such as threaded caps. Following formation of the threaded caps, the injection molding system 10 may position the first and second mold plates 14, 18 along axis 22 to an open position, as shown, to allow ejection of the caps from the threaded cores 130 of the first mold plate 14.

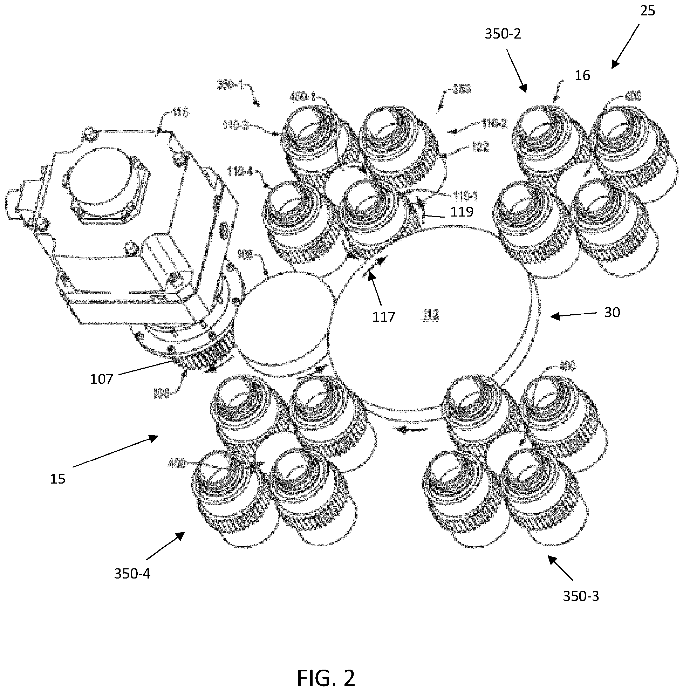

At the conclusion of the molding process, the resulting threaded molded articles are threadably mated to their respective threaded cores 130. As such, the first mold plate 14 can include a threaded mold decoupling system 15 configured to assist in the ejection of the molded caps from the threaded cores 130. As indicated in FIGS 1 and 2, the threaded mold decoupling system 15 can include a set of decoupling or unscrewing assemblies 25 and a driving assembly 30 disposed in operational communication with the set of unscrewing assemblies 25. Fig. 2 illustrates a detailed view of the set of unscrewing assemblies 25 and the driving assembly 30.

The driving assembly 30 is configured to actuate the set of unscrewing assemblies 25 relative to the corresponding set of threaded cores 130 to decouple threaded molded articles from the corresponding threaded cores 130 following a molding procedure. For example, as shown in FIGS. 1 and 2, the driving assembly 30 includes a driver element 106, a set of idler elements 108, and a driving element 112 which are rotatably coupled, in a single plane, to the first mold plate 14. For example, the first mold plate 14 is configured to support, and to allow relative rotation of, each of the driver element 106, set of idler elements 108, and driving element 112 during operation. While the driver element 106, set of idler elements 108, and the driving element 112 can be configured in a variety of ways, in one arrangement, the elements 106, 108, 112 are configured as gears such that the driver element 106 is configured to mesh with the set of idler elements 108, and the set of idler elements 108 are configured to mesh with the driving element 112.

The driver element 106 is connected to a motor assembly 115, such as a servo motor and gearbox, and includes a set of peripheral teeth 107 which mesh with corresponding peripheral teeth (not shown) of the set of idler elements 108. The set of idler elements 108 are configured to dispose the motor assembly 115 and the associated driver element 106 at lateral distance from the driving element 112 in order to minimize interference between the motor assembly 115 and the driving element 112 during operation. While the set of idler elements 108 is illustrated as having a single idler element, as will be provided below, the set of idler elements 108 can include any number of idler elements.

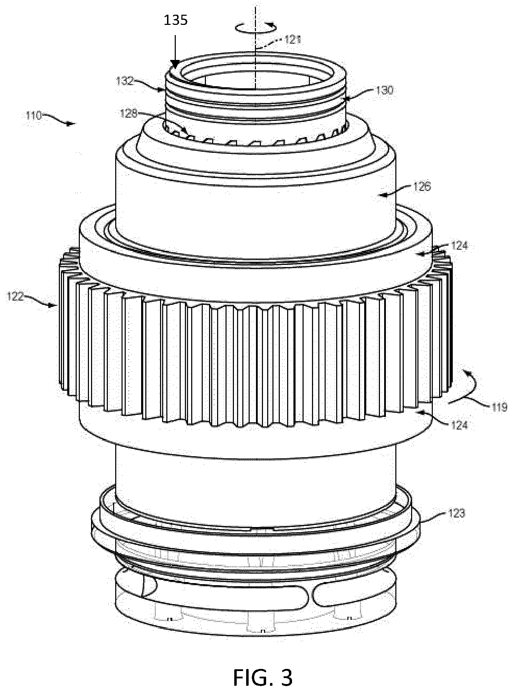

The driving element 112 is configured to actuate the set of unscrewing assemblies 25 to disengage threaded molded articles from the corresponding first set of cap mold elements 16 following a molding procedure. For example, with reference to both Figs. 2 and 3, the set of unscrewing assemblies 25 includes a plurality of individual unscrewing assemblies 110 which are disposed about an outer circumference of the driving element 112.

As indicated in FIG. 3, each unscrewing assembly 110 is disposed in proximity to, and in operative communication with, an associated threaded core 130 and includes a base 123 and an unscrewing element 126. In one arrangement, the base 123 is connected to the first plate 14 of the injection molding system 10 and the unscrewing element 126 is rotatably connected to the base 123. The unscrewing element 126 of each unscrewing assembly 110 surrounds the threaded core 130 and is disposed in operative communication with the driving element 112. For example, the unscrewing element 126 carries a set of teeth 122 disposed peripherally about a circumference of the unscrewing assembly 110 and bearing elements 124. With reference to Fig. 2, the teeth 122 of the unscrewing element 126 are configured to mesh with a set of teeth (not shown) disposed peripherally about a circumference of the driving element 112.

Returning to Fig. 3, the unscrewing assembly 110 is configured to engage a portion threaded mold article to allow removal of the threaded mold article from the threaded core 130 following a molding procedure. For example, the unscrewing element 126 can include a set of ratcheting teeth 128 configured to engage a portion of the threaded molded article, such as a base or bottom skirt of the threaded molded article.

As indicated in Fig 2, the set of unscrewing assemblies 25 can be arranged into subsets of unscrewing assemblies 350 and disposed about the driving element 112. For example, the set of unscrewing assemblies 25 can include four subsets of unscrewing assemblies 350-1 through 350-4 with each subset 350 being disposed in the same planar as the driving element 112. As shown, each unscrewing assembly 350 can include a single unscrewing assembly 110 disposed in operative communication with a driving element 112. For example, the first subset of unscrewing assemblies 350-1 can include an unscrewing assembly 110-1 disposed in operative communication with the driving element 112, such as via a meshing of the teeth 122 of the unscrewing assembly 110-1 with the teeth (not shown) of the driving element 112.

Each subset of unscrewing assemblies 350 can include a hub element 400 disposed in operative communication with each unscrewing assembly 110 of the subset 350. Taking the first subset of unscrewing assemblies 350-1 as an example, the first subset of unscrewing assemblies 350-1 includes first, second, third, and fourth unscrewing assemblies 110-1 through 110-4 disposed in operative communication with hub element 400-1. With such a configuration, the unscrewing assemblies 110-1 through 110-4 define a matrix of two rows by two columns relative to the hub element 400-1. The hub element 400-1 can be configured as a gear having teeth (not shown) that mesh with the teeth 122 of each unscrewing assembly 110-1 through 110-4.

The hub element 400 is configured to distribute the rotational movement received from one of the unscrewing assemblies 110 of the subset 350 to the remaining unscrewing assemblies 110 of the subset 350. For example, and with continued reference to the first subset of unscrewing assemblies 350-1, as the driving element 112 rotates clockwise via rotation of the driver element 106 and idler element 108, the driving element 112 rotates the first unscrewing assembly 110-1 in a counterclockwise direction. Rotation of the first unscrewing assembly 110-1, in turn, rotates the hub element 400-1 in a clockwise direction. The hub element 400-1 transfers this rotational movement to the unscrewing element 126 of each of the second, third, and fourth unscrewing assemblies 110-2, 110-3, and 110-4 to decouple or loosen a respective threaded molded article from a corresponding threaded core 130.

In use, rotation of the driving element 112 rotates the unscrewing element 126 of each unscrewing assembly 110 to decouple or loosen a threaded molded article from a corresponding threaded core 130. For example, with particular reference to Fig. 2, rotation of the driver element 106 in a clockwise direction causes the driving element 112 to rotate in a clockwise direction 117 about a center of rotation 127 via idler elements 108. Such rotation of the driving element 112 causes the unscrewing element 126 of each unscrewing assembly 110 to rotate in a counterclockwise direction 119. With such rotation of each unscrewing element 126, as indicated in Fig. 3, the ratcheting teeth 128 hold the threaded molded article (not shown) while the unscrewing element 126 rotates the threaded core 130 counterclockwise about a longitudinal axis 121. Rotation of the threaded core 130 relative to the threaded molded article disengages the threaded molded article from corresponding threads 132 of the threaded core 130. An ejection mechanism (not shown) can then eject remove the threaded molded article from the injection molding system 10.

Following ejection, rotation of the driver element 106 in a counterclockwise direction causes the driving element 112 to rotate in a counterclockwise direction 117 via idler elements 108. Such rotation of the driving element 112 causes the unscrewing element 126 of each unscrewing assembly 110, and associated threaded core 130, to rotate in a clockwise direction 119 to reset each unscrewing assembly 110 and each threaded core 130 for a subsequent molding procedure.

As provided above, the injection molding system 10 can be used to manufacture threaded molded caps that are configured to be folded closed prior to ejection from the mold. As such, with reference to Fig. 3, the threaded mold decoupling system 15 can be configured to provide substantially consistent and repeatable repositioning of a thread start location 135 of the threaded mold cores 130 over the course of multiple cycles. Such positioning can ensure the proper orientation of the correspondingly molded threaded caps relative to an in-mold cap closing device.

In one embodiment, the threaded mold decoupling system 15 is configured such that a ratio of a driving element circumference of the driving element 112 to an unscrewing element circumference of each unscrewing assembly 110 defines a number of rotations of each unscrewing element 126 relative to a number of rotations of the driving element 112. As such, the relative circumferences of the driving element 112 and the corresponding unscrewing assemblies 110 provides substantially consistent and repeatable repositioning of the threads of the threaded mold cores 130 over the course of multiple cycles. Such repositioning of the threaded molded cores 130 can ensures the proper orientation of the correspondingly molded threaded caps relative to in-mold cap closing devices associated with the threaded mold decoupling system 15.

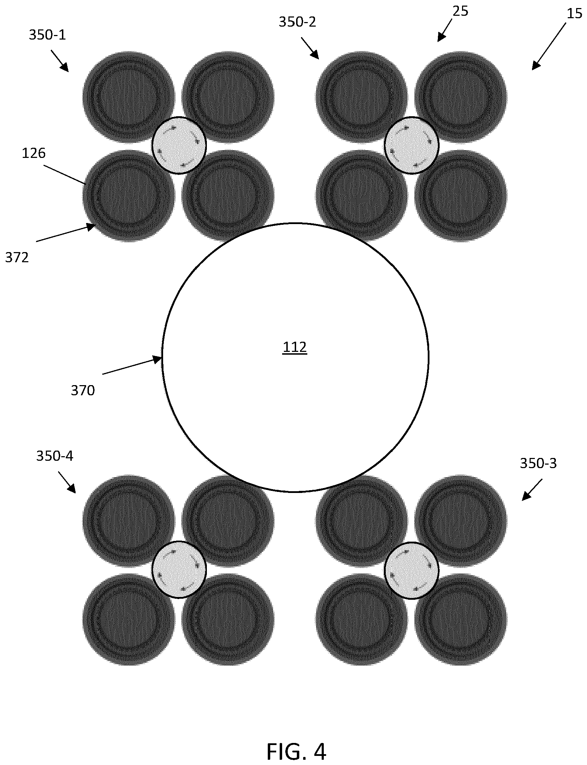

The driving element 112 and the unscrewing element 126 can define a variety of circumferential ratios. For example, Fig. 4 illustrates an embodiment of a threaded mold decoupling system 15 having four subsets of unscrewing assemblies 350-1 through 350-4 which are disposed in a matrix of four rows by four columns relative to the driving element 112. While the threaded mold decoupling system 15 can be utilized for threaded mold articles having a variety of diameters, in one arrangement, the configuration of the threaded mold decoupling system 15 illustrated in Fig. 4 can be utilized for relatively large threaded caps having a diameter between about two inches and three inches and can be utilized for relatively mid-sized caps having a diameter between about one and a quarter inches and two inches. With such a configuration, the ratio of a driving element circumference 370 of the driving element 112 to an unscrewing element circumference 372 of each unscrewing element 126 is 3:1. Accordingly, one rotation of the driving element 112 through 360° provides three rotations of each unscrewing element 126 through 1080°.

During a threaded mold decoupling procedure, rotation of the driving element 112 in a clockwise direction through 360°, in turn, rotates each unscrewing element 126 of each of the four subsets of unscrewing assemblies 350-1 through 350-4 in a counterclockwise direction through 1080° relative to a threaded mold core 130 to decouple the threaded mold cores 130 from the threaded mold element. Following ejection of the threaded mold elements from the injection molding system 10, rotation of the driving element 112 in a counterclockwise direction through 360°, in turn, rotates each unscrewing element 126 of each of the four subsets of unscrewing assemblies 350-1 through 350-4 in a clockwise direction through 1080°. Such positioning can resets each unscrewing assembly 110 for a subsequent molding procedure. For example, rotation of each unscrewing element 126 through 1080° can reposition the thread start location 135 of the threaded mold cores 130 relative to a start position associated with each unscrewing assembly 110.

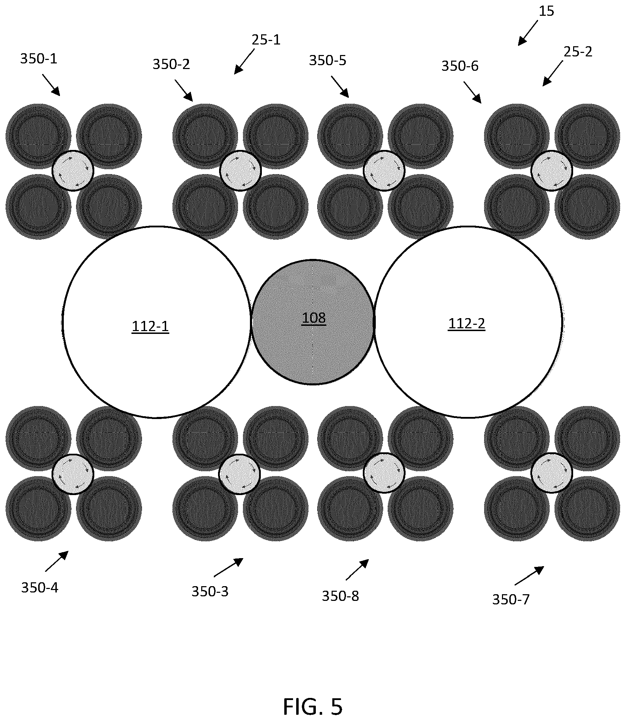

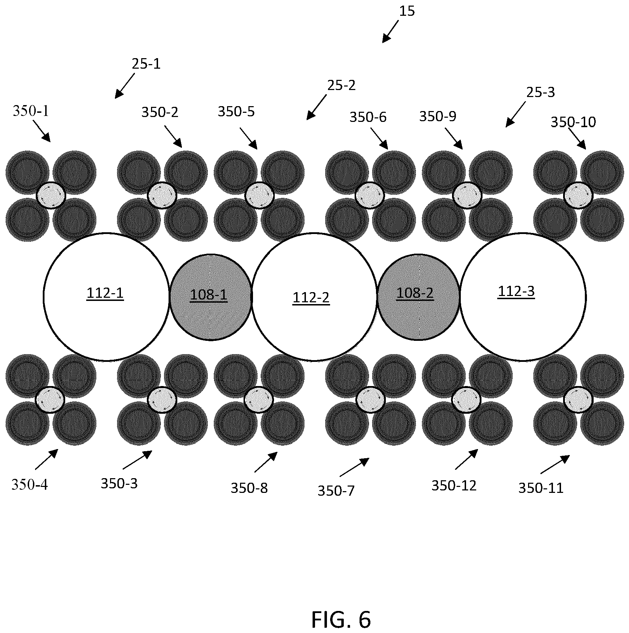

Fig. 4 identifies a threaded mold decoupling system 15 of an injection molding system 10 having four subsets of unscrewing assemblies 350-1 through 350-4. However, in one embodiment, with the linear layout of the unscrewing assemblies 110 defining a four row by four column matrix, the injection molding system 10 can be configured to include additional sets of unscrewing assemblies to maximize the number of threaded molds 130 available on the first mold plate 14. For example, Fig. 5 illustrates a threaded mold decoupling system 15 having a first set of unscrewing assemblies 25-1 with a first subset of unscrewing assemblies 350-1 through 350-4 disposed in operative engagement with a first driving element 112-1 and a second set of unscrewing assemblies 25-2 with a second subset of unscrewing assemblies 350-5 through 350-8 disposed in operative engagement with a second driving element 112-2. In another example, Fig. 6 illustrates a threaded mold decoupling system 15 having the first set of unscrewing assemblies 25-1, the second set of unscrewing assemblies 25-2 and a third set of unscrewing assemblies 25-3 having a third subset of unscrewing assemblies 350-9 through 350-12 disposed in operative engagement with a third driving element 112-3.

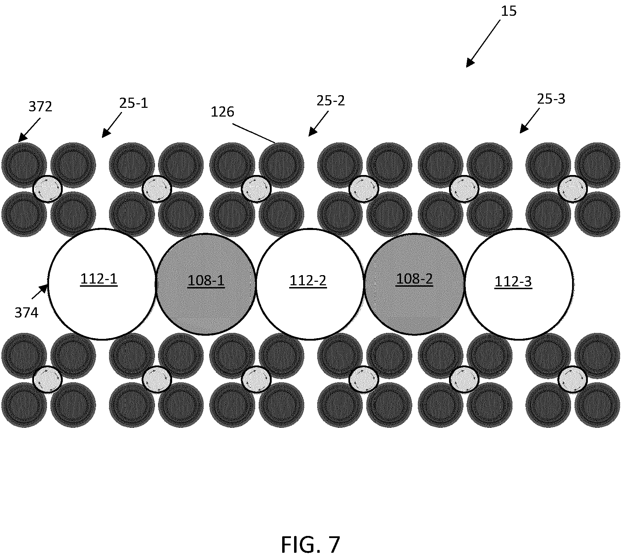

The driving element 112 and the unscrewing element 126 can define additional circumferential ratios. For example, Fig. 7 illustrates an embodiment of a threaded mold decoupling system 15 having first, second, and third sets of unscrewing assemblies 25-1, 25-2, 25-3. While the threaded mold decoupling system 15 can be utilized for threaded mold articles having a variety of diameters, in one arrangement, the configuration of the threaded mold decoupling system 15 illustrated in Fig. 7 can be utilized for relatively large threaded caps having a diameter between about two inches and three inches. With such a configuration, the ratio of a driving element circumference 374 of a driving element 112-1, 112-2, 112-3 to an unscrewing element circumference 372 of each unscrewing element 126 is 2.5:1. Accordingly, one rotation of each driving element 112-1, 112-2, 112-3 through 360° provides two and one-half rotations of each unscrewing element 126 through 900°.

During a threaded mold decoupling procedure, rotation of the driving elements 112-1, 112-2, 112-3 in a clockwise direction through 360°, in turn, rotates each unscrewing element 126 in a counterclockwise direction through 900° relative to a threaded mold core 130 to decouple the threaded mold cores 130 from the threaded mold element. Following ejection of the threaded mold elements from the injection molding system 10, rotation of the driving element 112 in a counterclockwise direction through 360°, in turn, rotates each unscrewing element 126 in a clockwise direction through 900°. Such positioning can reset each unscrewing assembly 110 for a subsequent molding procedure. For example, rotation of each unscrewing element 126 through 900° can reposition the thread start location 135 of the threaded mold cores 130 relative to a start position associated with each unscrewing assembly 110.

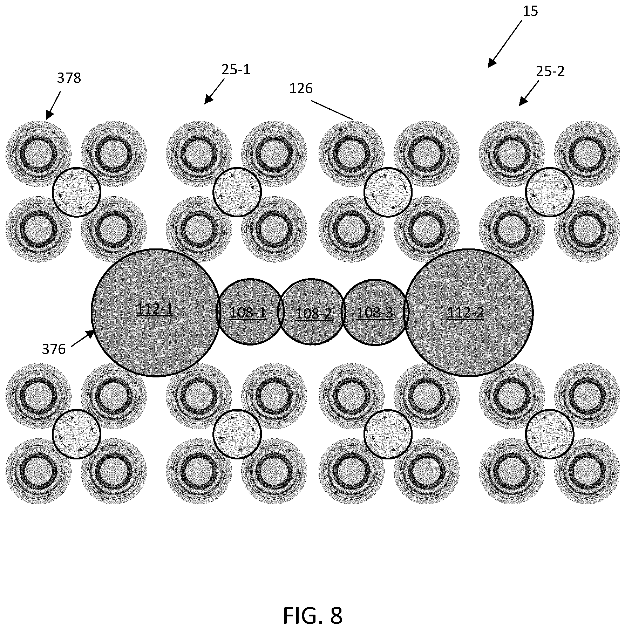

In another example, Fig. 8 illustrates an embodiment of a threaded mold decoupling system 15 having first and second sets of unscrewing assemblies 25-1, 25-2. While the threaded mold decoupling system 15 can be utilized for threaded mold articles having a variety of diameters, in one arrangement, the configuration of the threaded mold decoupling system 15 illustrated in Fig. 7 can be utilized for relatively mid-sized threaded caps having a diameter between about one and one-quarter inches and two inches. With such a configuration, the ratio of a driving element circumference 376 of a driving element 112-1, 112-2 to an unscrewing element circumference 378 of each unscrewing element 126 is 2:1. Accordingly, one rotation of each driving element 112-1, 112-2 through 360° provides two rotations of each unscrewing element 126 through 720°.

During a threaded mold decoupling procedure, rotation of the driving elements 112-1, 112-2 in a clockwise direction through 360°, in turn, rotates each unscrewing element 126 in a counterclockwise direction through 720° relative to a threaded mold core 130 to decouple the threaded mold cores 130 from the threaded mold element. Following ejection of the threaded mold elements from the injection molding system 10, rotation of the driving element 112 in a counterclockwise direction through 360°, in turn, rotates each unscrewing element 126 in a clockwise direction through 720°. Such positioning can reset each unscrewing assembly 110 for a subsequent molding procedure. For example, rotation of each unscrewing element 126 through 720° can reposition the thread start location 135 of the threaded mold cores 130 relative to a start position associated with each unscrewing assembly 110.

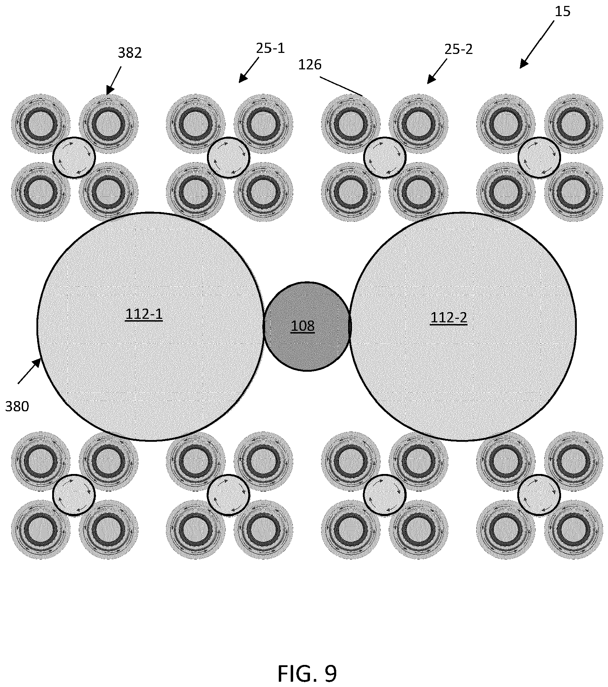

In another example, Fig. 9 illustrates an embodiment of a threaded mold decoupling system 15 having first and second sets of unscrewing assemblies 25-1, 25-2. While the threaded mold decoupling system 15 can be utilized for threaded mold articles having a variety of diameters, in one arrangement, the configuration of the threaded mold decoupling system 15 illustrated in Fig. 9 can be utilized for relatively mid-sized threaded caps having a diameter between about one and one-quarter inches and two inches. With such a configuration, the ratio of a driving element circumference 380 of a driving element 112-1, 112-2 to an unscrewing element circumference 382 of each unscrewing element 126 is 4:1. Accordingly, one rotation of each driving element 112-1, 112-2 through 360° provides four rotations of each unscrewing element 126 through 1440°.

During a threaded mold decoupling procedure, rotation of the driving elements 112-1, 112-2 in a clockwise direction through 360°, in turn, rotates each unscrewing element 126 in a counterclockwise direction through 1440° relative to a threaded mold core 130 to decouple the threaded mold cores 130 from the threaded mold element. Following ejection of the threaded mold elements from the injection molding system 10, rotation of the driving element 112 in a counterclockwise direction through 360°, in turn, rotates each unscrewing element 126 in a clockwise direction through 1440°. Such positioning can reset each unscrewing assembly 110 for a subsequent molding procedure. For example, rotation of each unscrewing element 126 through 1440° can reposition the thread start location 135 of the threaded mold cores 130 relative to a start position associated with each unscrewing assembly 110.

As provided above, based upon the relative circumferences of the driving gear 112 and the unscrewing element 126, a single revolution of the drive gear 112 can cause each of the unscrewing element 126 to rotate either two, three, or four turns. This configuration allows the threaded mold decoupling system 15 to accurately position the threaded cores 130 relative to the in-mold cap closing devices regardless of the thread sizes associated with the cores 130.

Also as provided above, the layout of the threaded mold decoupling system 15 can be configured to maximize the number of threaded mold cavities that can be included in an unscrewing mold assembly. For example, the threaded mold decoupling system is arranged such that a single drive gear 112 can control the rotational positioning of sixteen (16) unscrewing element 126. Further, the threaded mold decoupling system 15 utilizes standard sized and pitched gears for both the drive gear 112 and the unscrewing elements 126. Because the components are conventional off-the-shelf elements, the configuration of the threaded mold decoupling system 15 mitigates the requirement for costly, custom-manufactured components.

While various embodiments of the innovation have been particularly shown and described, it will be understood by those skilled in the art that various changes in form and details may be made therein without departing from the scope of the innovation as defined by the appended claims.

## Claims

1. A threaded mold decoupling system (15), comprising:
at least one set of unscrewing assemblies (25), each unscrewing assembly (110) of the at least one set of unscrewing assemblies (25) disposed in proximity to a corresponding threaded core (130) of a set of threaded cores (130) and each unscrewing assembly (110) having an unscrewing element (126) defining an unscrewing element circumference (372, 378, 382); and
a driving element (112) disposed in operative communication with an unscrewing assembly (110) of the at least one set of unscrewing assemblies (25), the driving element (112) defining a driving element circumference (370, 374, 376, 380), a ratio of the driving element circumference (370, 374, 376, 380) to the unscrewing element circumference (372, 378, 382) defining a number of rotations of each unscrewing element (126) relative to a number of rotations of the driving element (112);
the driving element (112) configured to:
rotate each unscrewing element (126) in a first direction, based upon the ratio, between a first position and a second position to decouple each threaded core (130) from a corresponding molded article, and
rotate each unscrewing element (126) in a second direction, based upon the ratio, between the second position and the first position to reset each unscrewing assembly (110) for a subsequent molding procedure.

2. The threaded mold decoupling system (15) of claim 1, wherein the at least one set of unscrewing assemblies (25) comprises four unscrewing assemblies (110) and a hub element (400) disposed in operative communication with each unscrewing element (126) of the four unscrewing assemblies (110).

3. The threaded mold decoupling system (15) of claim 2, wherein the four unscrewing assemblies (110) are disposed in a matrix of two rows by two columns relative to the hub element (400).

4. The threaded mold decoupling system (15) of any one of the previous claims, wherein the at least one set of unscrewing assemblies (25) comprises four sets of unscrewing assemblies (350), the driving element (112) disposed in operative communication with an unscrewing element (126) of each of the four sets of unscrewing assemblies (350).

5. The threaded mold decoupling system (15) of claim 4, wherein the four sets of unscrewing assemblies (350) are disposed in a matrix of four rows by four columns relative to the driving element (112).

6. The threaded mold decoupling system (15) of any one of the previous claims, wherein the ratio of the driving element circumference (370, 374, 376, 380) to the unscrewing element circumference (372, 378, 382) is 3:1, such that one rotation of the driving element (112) provides three rotations of each unscrewing element (126).

7. The threaded mold decoupling system (15) of any one of the claims 1 to 5, wherein the ratio of the driving element circumference (370, 374, 376, 380) to the unscrewing element circumference (372, 378, 382) is 2.5:1, such that one rotation of the driving element (112) provides two and one-half rotations of each unscrewing element (126).

8. The threaded mold decoupling system (15) of any one of the claims 1 to 5, wherein the ratio of the driving element circumference (370, 374, 376, 380) to the unscrewing element circumference (372, 378, 382) is 2:1, such that one rotation of the driving element (112) provides two rotations of each unscrewing element (126).

9. The threaded mold decoupling system (15) of any one of the claims 1 to 5, wherein the ratio of the driving element circumference (370, 374, 376, 380) to the unscrewing element circumference (372, 378, 382) is 4:1, such that one rotation of the driving element (112) provides four rotations of each unscrewing element (126).

10. An injection molding system (10), comprising:
a first mold plate (14) having a set of threaded cores (130);
a second mold plate (18) having a set of cavities (20) corresponding to the set of threaded cores (130); and
a threaded mold decoupling system (15) according to any one of the claims 1 to 9 coupled to the first mold plate (14).
